# EUROPEAN PATENT APPLICATION

(11) **EP 1 211 784 A1**
(43) Date of publication of application: **05.06.2002**
(21) Application number: 00956850.2
(22) Date of filing: 31.08.2000
(51) Int. Cl.: H02K 5/20

(54) **MOTOR FRAME AND MOTOR USING THE MOTOR FRAME AND MOTOR PUMP**

(30) Priority: 31.08.1999 JP 24544899; 29.02.2000 JP 2000054210; 13.03.2000 JP 2000068963
(71) Applicant: EBARA CORPORATION, Ohta-ku, Tokyo 144-8510 (JP)
(72) Inventor: YAMAMOTO, Masakazu Ebara Corporation, Ohta-ku, Tokyo 144-8510 (JP); MIYAKE, Yoshio Ebara Corporation, Ohta-ku, Tokyo 144-8510 (JP); IIJIMA, Katsuji Ebara Corporation, Ohta-ku, Tokyo 144-8510 (JP); MOTOYAMA, Kenji Ebara Corporation, Ohta-ku, Tokyo 144-8510 (JP)
(74) Representative: Wagner, Karl H., Dipl.-Ing.
(86) International application number: JP0005927
(87) International publication number: WO0117095

(57) **Abstract**

The present invention relates to a motor frame for effectively and stably water-cooling an inverter mounted thereon, and a motor and a motor pump which use the motor frame. A first cylinder (1) housing a motor stator therein, a second cylinder (2) disposed around the first cylinder with a space defined between the first cylinder and the second cylinder for a handled fluid to flow therethrough, and a seat (3) disposed on an outer circumferential surface of the second cylinder for installing a frequency converter thereon, are integrally formed of one metal material.

## Description

### Technical Field

The present invention relates to a motor frame, and a motor and a motor pump which use the motor frame, and more particularly to a motor frame having a structure designed for mounting a frequency converter and made of stainless steel, and a motor and a motor pump which use the motor frame. The present invention is also related to a multistage motor pump having impellers mounted respectively on the opposite ends of a main shaft.

### Background Art

Heretofore, there has been known a pump assembly in which a frequency converter, typically an inverter, is attached to an electric motor pump, and a liquid handled by the pump removes heat generated by the frequency converter. For example, Japanese Patent Application No. 5-350994 (Japanese laid-open Patent Publication No. 7-189996) discloses a structure where an inverter is mounted on the outer surface of a cylindrical pump casing in a full-circumferential-flow pump.

In the pump assembly disclosed in Japanese laid-open patent publication No. 7-189996, by mounting the inverter on the outer surface of the cylindrical pump casing of the full-circumferential flow pump, a heat sink for cooling the inverter is unnecessary to reduce the inverter in size. Further, a motor is reduced in size by increasing frequency of electric power supplied from the inverter thereto, and a pump is also reduced in size by increasing a rotational speed thereof.

With the pump assembly disclosed in Japanese laid-open patent publication No. 7-189996, however, the pump casing is of a hollow cylindrical shape and has a curved surface held in contact with a lower case of sheet metal which houses the inverter. Therefore, the contact surfaces of the pump casing and the lower case tend to have different curvatures and be spaced from each other by a gap, making cooling conditions for the inverter unstable. Since the contacting portions of the inverter and the lower case are also curved, the heat transfer through these contacting portions is liable to fluctuate.

To improve the above difficulties, the applicant of the present application has proposed a pump assembly having a bracket of aluminum alloy mounted on an outer surface of a pump casing of sheet metal and an inverter (frequency converter assembly) fixed to the bracket. In this pump assembly, the bracket and the frequency converter assembly have flat contact surfaces and hence are less liable to be spaced from each other by a gap. However, since the pump casing and the bracket have curved contact surfaces, cooling conditions for the frequency converter tend to be unstable for the same reasons as described above. Generally, such a problem can be solved by applying a filler such as liquid silicone or the like to the contact surfaces to fill the gap with the filler. This process, however, is troublesome and time-consuming, and is not preferable from the viewpoint of productivity.

This type of pump is primarily made of sheet metal of austenitic stainless steel such as SUS304, SUS304L, SUS316, or SUS316L according to JIS. Austenitic stainless steel is highly ductile and its sheet metal can easily be machined, e.g., pressed and bent, and can easily be welded. Therefore, austenitic stainless steel is suitable for making up a structural body of divided members welded together.

However, since austenitic stainless steel has the following characteristics, there are design and structural limitations on the use of austenitic stainless steel in pumps having the above structure.
(1) Heat conductivity is small:
   Austenitic stainless steel has a smaller heat conductivity than general steels (mild steels) (1/5 to 1/6 that of the general steels). If austenitic stainless steel is used in pumps having the above structure, then it makes them disadvantageous with respect to the cooling of the motor and the inverter. While no problems essentially occur from using austenitic stainless steel in pumps of relatively small output and size because those pumps can use thin sheet metal, pumps of relatively large output and size suffer a large problem about cooling because those pumps need to have a large wall thickness for structural strength.
(2) Thermal expansion coefficient (coefficient of linear expansion) is large.
   Austenitic stainless steel has a larger thermal expansion coefficient than general steels (mild steels) (about 1.5 times of the general steels). If austenitic stainless steel is used in pumps having the above structure, then the bonding strength between a motor stator (whose silicon steel sheets have substantially the same thermal expansion coefficient as mild steel) and a motor frame is reduced when the temperature of the motor rises. This problem has been solved in pumps of relatively small output and size by attaching the motor frame, which is made of thin sheet metal, to the outer circumferential surface of the motor stator and thereafter shrinking the motor frame radially by a waste bead welding process (producing residual tensile stresses), for example. However, the waste bead welding process cannot practically be employed for pumps of relatively large output and size because they need to have a large wall thickness for structural strength, as describe above. Specifically, the waste bead welding process requires a large amount of heat input, and is too troublesome and time-consuming. Therefore, it is necessary to solve the above problem according to another process.
(3) Austenitic stainless steel has no magnetism:
   Generally, austenitic stainless steel has no magnetism. Since whether a motor fame is magnetic or not affects the size and characteristics of the motor, if the motor frame of the pump having the above structure is made of austenitic stainless steel, then the motor stator (of a silicon steel plate) needs to be designed in a large size due to the lack of magnetism in the motor frame. Pumps of relatively small output and size suffer almost no problem because the motor is slightly increased in size. However, pumps of relatively large output and size become very large in size because the absolute amount by which the motor is increased in size becomes large even though the size of the motor increases at the same ratio as with the pumps of relatively small output and size.
(4) Productivity may be impaired if there are many welded portions.

As described above, sheets of austenitic stainless steel can be machined for relatively good productivity. However, if there are many welded portions involved, then the time required to carry out the welding process is so long that the cost of manufacture may become unexpectedly high.

The cost of manufacture can be reduced by making an integral structural body of cast stainless steel according to a casting process. However, since castings are generally liable to have large wall thicknesses in manufacturing as compared with products of sheet metal, the above problems (1) through (3) which have not been posed on thin metal sheets (having wall thicknesses ranging from about 1.5 mm to about 3 mm) may become serious.

Heretofore, there has been known a multistage full-circumferential-flow motor pump of a high pump head which has impellers mounted respectively on the opposite ends of a main shaft of a canned motor to balance an axial thrust, and operable for high-speed rotation with use of the above inverter. For example, a vertical multistage motor pump has a pump inlet port and a pump outlet port which are provided on an outer pump casing of sheet metal, and impellers in in-line four stages (two impellers on each of the opposite ends of the main shaft of the motor) housed in the outer pump casing.

This type of pump has been manufactured as a pump having a high pump head of about 200 m. Since the motor is designed for high-speed rotation to reduce the size of the pump and the motor which is a canned motor is free of liquid leakage, the pump is often incorporated as a pump for supplying water under pressure to a reverse osmosis membrane in a pure water production apparatus and as a pump for supplying water under pressure to a cleaning nozzle in various cleaning apparatus.

The pumps for use in those apparatus are generally required (1) to be small, compact, and space-saving, (2) to be maintenance-free, (3) not to contaminate the liquid which is handled thereby, and (4) to easily cope with options, such as a change in the direction in which the pump is connected to the piping.

However, although the above pumps can satisfy the requirements (1) through (3), they fail to sufficiently meet the above requirement (4). Specifically, since the pump inlet and outlet ports of the conventional multistage motor pumps are welded to the outer pump casing of sheet metal, the positions of the pump inlet and outlet ports cannot be changed thereafter, and hence the direction in which the pump is connected to the piping is limited. If a number of such pumps are prepared as common parts for the apparatus and thereafter modified and designed to the specifications of customers, then the pump is occasionally forced to have undesirable piping layouts, resulting in an increase in the overall size of the apparatus including the pump.

Other than the multistage motor pumps, there has been known a pump which requires a pipe interconnecting a pump casing housing an impeller in a first stage and another pump casing housing an impeller in a second stage, across a motor accommodated in the pump. In such a case, the pipe thus required prevents the pump inlet and outlet ports from being freely determined in their directions, resulting in the same problems as described above.

Further, the pumps for use in the above applications are required to be cleaned not to leave fats and oils in the pumps (according to oil-proofing and decreasing processes). The oil-proofing and decreasing processes for the above pumps are troublesome and time-consuming because the pump inlet and outlet ports made of sheet metal are welded in position and the overall pumps are of an integral construction.

### Disclosure of Invention

The present invention has been made in view of the above problems. It is a first object of the present invention to provide a motor frame for effectively and stably water-cooling an inverter mounted thereon, and a motor and a motor pump which use the motor frame.

A second object of the present invention is to provide a motor frame which solves the problems that occur if austenitic stainless steel is used in pumps, and makes suitable conditions for cooling a motor stator and a frequency converter, that is, which has good productivity, excellent cooling conditions, and good motor characteristics, and a motor and a motor pump which use the motor frame.

A third object of the present invention is to provide a compact multistage motor pump which has increased freedom with respect to a direction in which it is connected to a pipe, and can easily be made oil-proof and degreased.

In order to attain the first object, according to a first aspect of the present invention, there is provided a motor frame characterized in that a first cylinder housing a motor stator therein, a second cylinder disposed around the first cylinder with a space defined between the first cylinder and the second cylinder for a handled fluid to flow therethrough, and a seat disposed on an outer circumferential surface of the second cylinder for installing a frequency converter thereon, are integrally formed of one metal material.

With the above arrangement, since the frequency converter and the motor frame are held in contact with each other through flat surfaces, any gap is unlikely to be formed therebetween, so that the frequency converter can be well cooled and cooling conditions are stabilized. Since a component such as a bracket of aluminum alloy is not present between the frequency converter and the motor frame, the frequency converter can be cooled highly efficiently. As a result, it is not necessary to coat the contact surfaces with a filler such as liquid silicone or the like, and hence the productivity is improved.

According to another aspect of the present invention, the cylinder has on opposite axial ends thereof sockets for providing coaxial relationship with attached components and bolt seats for fastening bolts. As a result, a nozzle casing, described later on, a liner ring fixed to the nozzle casing, and a rotating member, typically an impeller, can be assembled together in such a state that they are easily held in coaxial relationship with each other.

According to another aspect of the present invention, the seat for installing a frequency converter thereon is positioned between bolt seats in the motor frame as viewed from an axial end. As a result, the frequency converter and bolts for attaching the nozzle casing do not interfere with each other, and the area of the seat for the frequency converter is relatively increased, so that the frequency converter can be cooled effectively.

According to another aspect of the present invention, an axial rib interconnecting the first cylinder and the second cylinder have a length which is at least equal to one half of the overall length of the motor frame. As a result, the heat generated by the frequency converter is effectively radiated not only from the inner surface of the second cylinder, but also from the surfaces of the rib.

Further, the handled fluid that is drawn from the inlet nozzle casing passes through the impeller and a guide device and is introduced into the passage in the motor frame. Since the handled fluid that has flowed out of the guide device contains a small circumferential flow, it may possibly lead to a reduction in the efficiency of the pump and the generation of noise. These problems are simultaneously solved by extending the overall length of the rib which interconnects the first cylinder and the second cylinder of the motor frame.

According to another aspect of the present invention, an axial end of the motor frame and a component attached to the axial end are held in direct contact with each other. As a result, the heat generated by the frequency converter is effectively radiated not only from the inner surface of the second cylinder of the motor frame, but also from the inner surface of the nozzle casing, for example.

According to an aspect of the present invention, there is provided a motor characterized by comprising: the above motor frame; a motor stator housed in the first cylinder of the motor frame; a motor frame side plate closing an open end of the motor frame; and a motor rotor disposed inside of the motor stator and rotatably supported by a bearing provided in the motor frame.

According to an aspect of the present invention, there is provided a motor pump characterized by comprising: the above motor; an impeller fixed to a main shaft of the motor rotor; and a nozzle casing mounted on an axial end of the motor frame and housing the impeller therein.

In order to attain the second object, according to a first aspect of the present invention, there is proposed a motor frame housing a motor stator therein, characterized in that: the motor frame is formed of non-austenitic cast stainless steel. At the same time, there is proposed a motor and a motor pump which use the above motor frame.

Specifically, it is proposed to use, as the non-austenitic cast stainless steel, martensitic stainless steel containing 15 - 17 % of chromium (Cr), 0.5 - 2 % of molybdenum (Mo), 4 - 6 % of nickel (Ni), and 0.05 % or less of carbon (C). Alternatively, it is proposed to use, as the non-austenitic cast stainless steel, ferritic stainless steel containing 20 - 30 % of chromium (Cr) and 0.5 - 4 % of molybdenum (Mo).

Further, according to another aspect of the present invention, there is proposed a motor frame characterized in that: the motor frame comprises a first cylinder housing a motor stator therein and a second cylinder disposed around the first cylinder with a space defined between the first cylinder and the second cylinder for a handled fluid to flow therethrough; and the first cylinder and the second cylinder are integrally formed of non-austenitic cast stainless steel with each other.

Non-austenitic stainless steel generally a greater heat conductivity and a smaller thermal expansion coefficient than austenitic stainless steel, and is magnetic. Therefore, the non-austenitic stainless steel has excellent properties for use as a material of the motor frame. Accordingly, with use of the non-austenitic stainless steel and a lost-wax precision casting process capable of forming thin sheets, the application of the above type of pump can be expanded to a large output range.

Many pumps of the above type are made operable at high rotational speeds and reduced in size by increasing the frequency of power supplied from the frequency converter to the motor. Such pumps are designed to block noise of a relatively high frequency which is produced at high-speed operation of the pump, with the handled fluid surrounding the motor. According to the present invention, since the wall thickness of the motor frame, particularly the second cylinder, is greater than that in the case of a motor frame or a second cylinder which is made of sheet metal, the motor frame or the second cylinder is effective to block noise.

According to an aspect of the present invention, the second cylinder has a seat for installing a frequency converter on an outer circumferential surface thereof; and the first cylinder, the second cylinder, and the seat are integrally formed of non-austenitic cast stainless steel with each other.

As described above, since the frequency converter and the motor frame are held in contact with each other through the flat seat, any gap is unlikely to be formed therebetween, so that the frequency converter can be well cooled and cooling conditions are stabilized. Since a component such as a bracket of aluminum alloy is not present between the frequency converter and the motor frame, the frequency converter can be cooled highly efficiently. As a result, it is not necessary to coat the contact surfaces with a filler such as liquid silicone or the like, and the productivity is improved.

As described above, non-austenitic stainless steel generally a greater heat conductivity and a smaller thermal expansion coefficient than austenitic stainless steel, and is magnetic. Therefore, the non-austenitic stainless steel has excellent properties for use as a material of the motor frame. However, non-austenitic stainless steel is generally poorer in weldability and corrosion resistance than austenitic stainless steel.

The weldability of martensitic and ferritic stainless steels is improved by minimizing the content of carbon (C), and the corrosion resistance of martensitic and ferritic stainless steels is increased to substantially the same level as SUS304 by increasing the content of chromium (Cr) and nickel (Ni). By integrally casting the components, excessive welded portions are reduced, and remaining welded portions are improved in corrosion resistance by a polishing process or a passivation process.

From the viewpoint of the cooling of the motor and the saving of resources (material resources), the components should preferably be manufactured according to a lost-was precision casting process which is capable of forming thin sheets.

According to the present invention, there is proposed to apply the motor frame to canned motors and submerged pumps as effective applications. The motors of these types do not have a forced-air cooling fan and is of a closed structure, unlike general motors for use on land. The motors are mainly cooled at the outer circumferential surface of the motor stator, i.e., cooled by convective air or water from the motor frame. Therefore, the motor frame integrally formed of non-austenitic cast stainless steel is effective from the viewpoint of heat conductivity and thermal expansion coefficient.

In order to attain the third object, according to a second aspect of the present invention, there is provided a multistage motor pump characterized by comprising: a motor frame housing a motor stator and providing a passage for a handled liquid around the motor stator; a first pump casing mounted on an axial end of the motor frame at a variable angle as viewed in an axial direction; a second pump casing mounted on an opposite axial end of the motor frame at a variable angle as viewed in the axial direction; and at least one impeller housed in each of the first pump casing and the second pump casing.

Since the direction of an inlet portion (e.g., an inlet nozzle) connected to a pipe for drawing the handled liquid or an outlet portion (e.g., an outlet nozzle) connected to a pipe for discharging the handled liquid, can be changed in modifying and designing the pump to meet specifications of customers, it is not necessary to design wasteful piping layouts, and the overall apparatus including the pump is made compact.

According to another aspect of the present invention, there is provided a multistage motor pump characterized by comprising: a motor providing a passage for a handled liquid around a motor stator; a first pump casing mounted on an axial end of the motor at a variable angle as viewed in an axial direction; a first impeller disposed in the first pump casing for guiding the handled liquid to the passage around the motor stator, a second pump casing mounted on an opposite axial end of the motor at a variable angle as viewed in the axial direction; and a second impeller disposed in the second pump casing for guiding the handled liquid from the passage around the motor stator, the first impeller and the second impeller having respective inlet ports directed opposite to each other.

With the above arrangement, it is not necessary to design wasteful piping layouts, the overall apparatus including the pump is made compact, and it is possible to balance axial thrust loads.

### Brief Description of Drawings

FIG. 1 is a vertical cross-sectional view showing a full-circumferential-flow in-line pump as an example of a motor pump according to a first embodiment of the present invention;
FIG. 2 is a cross-sectional view taken along a line II - II in FIG. 1;
FIG. 3 is a view as viewed in the direction of the arrow III in FIG. 1;
FIG. 4 is a vertical cross-sectional view showing a multistage motor pump according to a second embodiment of the present invention; and
FIGS. 5A through 5C are views showing variations of the layout of inlet and outlet pump casings of the multistage motor pump shown in FIG. 4, and FIG. 5A is a view showing the directions of inlet and outlet nozzles shown in FIG. 4, and FIGS. 5B and 5C are views showing the directions of inlet and outlet nozzles in other embodiments.

### Best Mode for Carrying Out the Invention

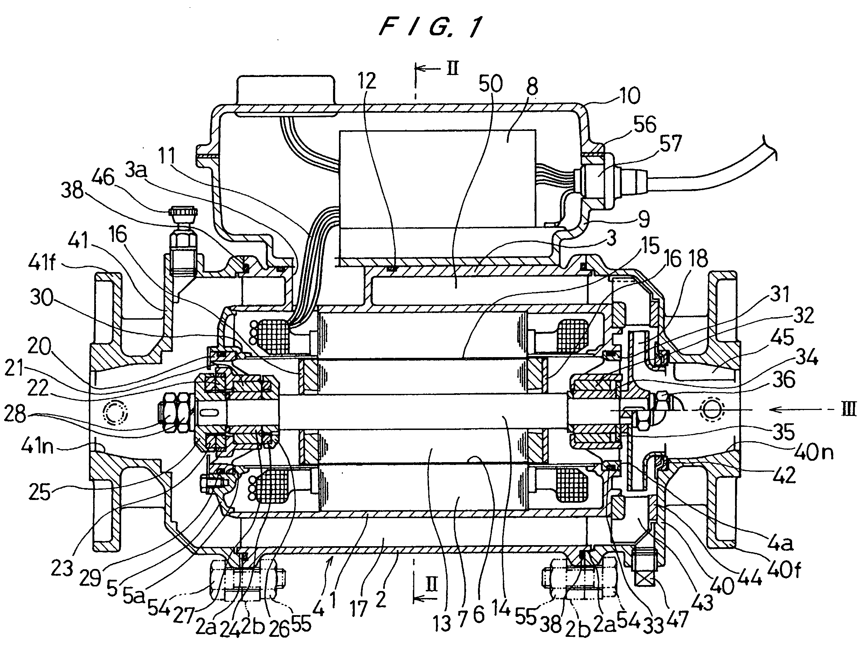

A first embodiment of the present invention will be described in detail below with reference to the drawings. The first embodiment will be described below with reference to FIGS. 1 through 3.

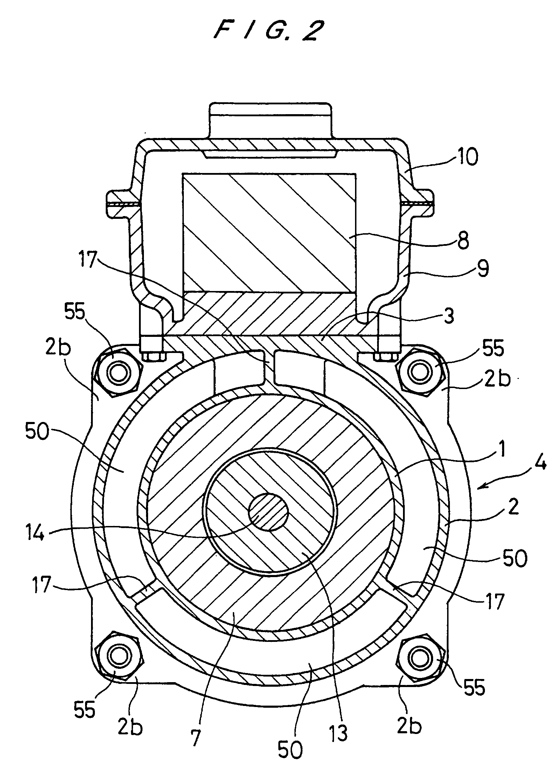

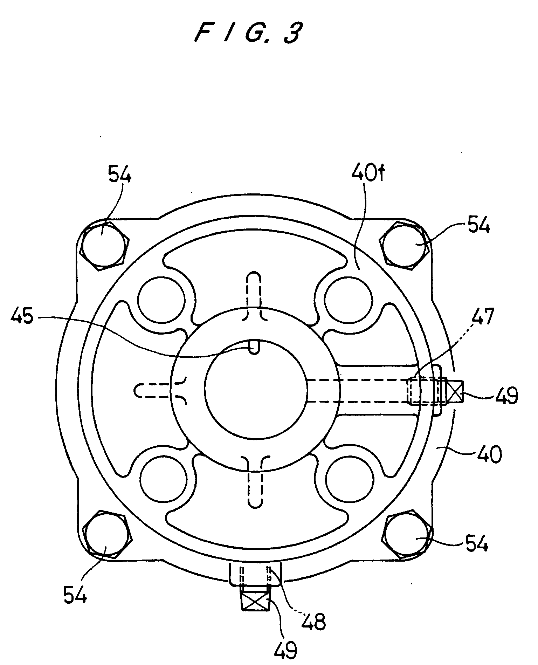

FIG. 1 is a vertical cross-sectional view showing a full-circumferential-flow in-line pump as an example of a motor pump according to the present embodiment, FIG. 2 is a cross-sectional view taken along a line II-II in FIG. 1, and FIG. 3 is a view as viewed in the direction of the arrow III in FIG. 1.

The full-circumferential-flow pump according to the present embodiment has a motor frame 4 of integral structure formed of non-austenitic cast stainless steel which comprises a first cylinder 1 housing a motor stator therein, a second cylinder 2 disposed around the first cylinder 1 with a space 50 defined between the first cylinder 1 and the second cylinder 2 for a handled fluid to flow therethrough, and a flat seat 3 disposed on an outer circumferential surface of the second cylinder 2 for installing a frequency converter thereon. The motor frame 4 is formed according to a lost-wax casting process, for example.

A motor stator 7 is shrink-fitted in the first cylinder 1, and a motor frame side plate 5 made of non-austenitic cast stainless steel is hermetically welded to an axial open end of the first cylinder 1. A stator can 6 of a thin sheet of austenitic stainless steel (SUS316) is fitted in the motor stator 7, and hermetically welded to the motor frame 4 and the motor frame side plate 5. The reasons why the stator can 6 is made of austenitic stainless steel are that it can be formed as a very thin can and the stator can 6 that is nonmagnetic is advantageous for motor characteristics.

As shown in FIG. 2, the flat seat 3 which has a flat upper surface is mounted on the outer circumferential surface of the second cylinder 2 of the motor frame 4, and a lower case 9 and an upper case 10 which jointly house a frequency converter 8 is mounted on the flat seat 3. The flat seat 3 allows the frequency converter 8 and the motor frame 4 to be held in contact with each other through flat surfaces. Therefore, any gap is unlikely to be formed therebetween, so that the frequency converter 8 can be well cooled and cooling conditions are stabilized. An output signal from the frequency converter 8 is supplied to the motor stator 7 by lead wires 11 extending through a lead wire hole 3a. The lead wire hole 3a is surrounded by an O-ring 12 to hermetically seal the interior of the casing made up of the upper and lower cases 10, 9 and the interior of the motor frame 4 from the exterior space.

A motor rotor 13 is rotatably disposed inside of the motor stator 7. The motor rotor 13 is shrink-fitted over a main shaft 14, and a rotor can 15, rotor side plates 16, and the main shaft 14 are hermetically welded together to protect the motor rotor 13 from corrosion by the handled fluid. The rotor can 15 and the rotor side plates 16 are made of austenitic stainless steel because they can be formed as very thin rotor can and rotor side plates and the rotor can 15 and the rotor side plates 16 that are nonmagnetic is advantageous for motor characteristics, as with the stator can 6.

The main shaft 14 is made of non-austenitic stainless steel, and preferably is made of martensitic stainless steel containing 15 - 17 % of chromium (Cr), 0.5 - 2 % of molybdenum (Mo), 4 - 6 % of nickel (Ni), and 0.05 % or less of carbon (C) . The martensitic stainless steel is higher in strength than the austenitic stainless steel and as corrosion-resistant as the austenitic stainless steel. The martensitic stainless steel can well be welded to the can and other members as it contains a trace amount of carbon (C). The main shaft 14 may also be made of ferritic stainless steel containing 20 - 30 % of chromium (Cr) and 0.5 - 4 % of molybdenum (Mo). Not only the main shaft 14, but also the motor frame 4 and other members may be made of the above martensitic stainless steel or ferritic stainless steel.

The main shaft 14 is supported at its opposite ends by bearings (described later on) provided in the motor frame 4, and an impeller 18 is fixed to one of the ends of the main shaft 14. The impeller 18 is cast of non-austenitic cast stainless steel or pressed and welded of thin austenitic stainless steel. In FIG. 1, the impeller 18 is shown as having an upper half which is cast of non-austenitic cast stainless steel and a lower half which is pressed and welded of thin austenitic stainless steel.

Next, bearing-related parts on an anti-thrust-load side which is opposite to the impeller 18 will be described below. A radial bearing 21 and a fixed thrust bearing 22 are mounted on a bearing bracket 20. The radial bearing 21 has an end face functioning as a fixed thrust bearing for bearing reverse thrust loads that occur in rare occasions.

A rotatable normal-thrust bearing 23 for bearing normal thrust loads and a rotatable reverse-thrust bearing 24 for bearing reverse thrust loads are disposed respectively on opposite sides of the radial bearing 21 and the fixed thrust bearing 22. The two thrust bearings 23, 24 are shrink-fitted in respective thrust disks 25, 26, which are fixed in position by double nuts 28 on the end of the main shaft 14, with interposing a sleeve 27 that makes up a sliding assembly in cooperation with the radial bearing.

The bearing bracket 20 is inserted in a socket 5a defined in the motor frame side plate 5 with an 0-ring 29 of a resilient material. The bearing bracket 20 is held in abutment against the motor frame side plate 5 through a gasket 30 of a resilient material. The thrust bearings 22, 23, 24, the radial bearing 21, and the sleeve 27 are made of silicon carbide (SiC), which is a ceramic material, and the bearing bracket 20 and the thrust disks 25, 26 are made of stainless steel (either austenitic stainless steel or non-austenitic stainless steel).

Next, bearing-related parts on a thrust-load side near the impeller will be described below. A radial bearing 32 is mounted on a bearing bracket 31, and inserted in a socket 4a defined in the motor frame 4 with an O-ring 33 of a resilient material. A sleeve 34 that makes up a sliding assembly in cooperation with the radial bearing 32 is fixed in position through a washer 35 and the impeller 18 by nut 36 on the end of the main shaft 14.

The second cylinder 2 of the motor frame 4 has on its opposite axial ends sockets 2a, 2a for providing coaxial relationship with attached components and bolt seats 2b, 2b for fastening bolts. Nozzle casings 40, 41 of cast stainless steel are fixedly mounted in the sockets 2a with 0-rings 38. The inlet nozzle casing 40 and the outlet nozzle casing 41 have respective integral nozzles 40n, 41n and respective integral attachment flanges 40f, 41f. The inlet nozzle casing 40 and the outlet nozzle casing 41 are integrally formed of cast stainless steel according to a lost-wax casting process. The cast stainless steel, of which the nozzle casings 40, 41 are made, may be austenitic stainless steel or non-austenitic stainless steel. Since the non-austenitic cast stainless steel is less susceptible to stress-corrosion cracking, it is suitable for use in general pump applications. The inlet nozzle casing 40 and the outlet nozzle casing 41 are constructed as identical parts and used as common parts for increased productivity. A liner ring 42 which makes up a sliding assembly in cooperation with the impeller 18 is fixed to the inlet nozzle casing 40.

The inlet nozzle casing 40 and the motor frame 4 grip therebetween a guide device 43 of resin for guiding the fluid that is discharged from the impeller 18. A gasket 44 made of a resilient material such as rubber is disposed between the guide device 43 and the inlet nozzle casing 40 for preventing unnecessary stresses from being applied to the guide device 43 due to dimensional accuracy variations and also for preventing the handled fluid which has been recovered or increased in pressure by the guide device 43 from flowing back to the impeller.

As shown in FIG. 3, the nozzle casing 40 has a rib 45 for effectively preventing a circumferential swirling flow to increase the suction capability thereof. The nozzle casings 40, 41 have, on their outer circumferences, air-bleeder valves 46, a threaded hole 47 for measuring pressure, and a water-draining threaded hole 48. These threaded holes are closed by respective plugs 49.

As shown in FIG. 2, the flat seat 3 for installing the frequency converter 8 thereon is disposed between the bolt seats 2b for attaching the nozzle casings as viewed from the axial end of the motor frame 4. The flat seat 3 is thus positioned to prevent the frequency converter 8 from interfering with bolts 54 and nuts 55 for attaching the nozzle casings. Since the flat seat 3 can have a relatively large area, it contributes to the cooling of the frequency converter 8. The motor frame 4 and the nozzle casings 40, 41 are fastened to each other by the bolts 54 and the nuts 55.

Axial ribs 17 which interconnect the first cylinder 1 and the second cylinder 2 have a length which is at least equal to one half of the overall length of the motor frame 4. As a result, the heat generated by the frequency converter 8 is effectively radiated not only from the inner surface of the second cylinder 2, but also from the surfaces of the ribs 17. The handled fluid that is drawn from the inlet nozzle casing 40 passes through the impeller 18 and the guide device 43 and is introduced into the passage 50 in the motor frame 4. Since the handled fluid that has flowed out of the guide device 43 contains a small circumferential flow, it may possibly lead to a reduction in the efficiency of the pump and the generation of noise. In the present embodiment, these problems are simultaneously solved by extending the overall length of the ribs 17 which interconnect the first cylinder 1 and the second cylinder 2 of the motor frame 4. The handled fluid that is introduced into the passage 50 in the motor frame 4 effectively cools the outer circumferential portion of the motor stator 7 and the frequency converter 8. Some of the handled fluid lubricates and cools the bearings 21, 22, 23, 24, 32 and the sleeves 27, 34, and at the same time cools the inner circumferential portion of the motor stator 7 and the motor rotor 13.

The axial ends of the motor frame 4 and the nozzle casings 40, 41 are held in direct contact with each other. As a consequence, the heat generated by the frequency converter 8 is not only radiated from the inner surface of the second cylinder 2 of the motor frame 4, but also transferred from the aforementioned contact surfaces to the nozzle casings 40, 41 and effectively radiated from their inner surfaces by the handled fluid.

The frequency converter 8 is fixedly mounted in the lower case 9 in intimate contact therewith for radiating the generated heat into the handled fluid. The lower case 9 and the upper case 10 are fastened to each other by fastening means such as bolts with a gasket 56 of rubber interposed between their facing surfaces. A power cable 57 as a means for inputting electric power from a power supply is mounted on the lower case 9. The cable 57 comprises a hermetically sealed cable in which air is prevented from flowing from core wires thereof. Inasmuch as the interior of the casing constructed of the lower and upper cases 9, 10 is completely isolated from the exterior space, no dew condensation occurs within the casing and no danger of insulation degradation occurs even if the pump is used for circulating cold water in high-temperature, high-humidity environments.

The motor comprises two-pole three-phase induction motor and operates at a high rotational speed of about 9600 revolutions per minute with an electric power at 160 Hz under 200 V, for example, supplied from the frequency converter. As a result, the pump assembly including the impeller is reduced in size, and the motor is reduced in size due to a reduction in torque. In order to install the frequency converter on the pump assembly which is reduced in size and surface area, it is necessary to reduce the size of the frequency converter itself by improving cooling conditions. The present invention makes it possible to reduce the size of the frequency converter itself.

In the above embodiment, the flat seat is provided on the outer circumferential surface of the second cylinder. However, a seat may have no flat upper surface as long as a seat can be employed for installing the frequency converter.

According to the present invention, as described above, it is possible to provide a motor frame for effectively and stably water-cooling an inverter mounted thereon, and also to provide a small motor and motor pump using the motor frame. Since cooling conditions are generally improved, it is possible to provide a highly compact motor pump in which a pump and a motor are reduced in size by higher rotational speeds and simultaneously an inverter is reduced in size. It is also possible to provide a motor frame having good productivity, excellent cooling conditions, and good motor characteristics, and a motor and a motor pump which use the motor frame.

According to the embodiment of the present invention, the motor frame has a first cylinder housing a motor stator therein and a second cylinder disposed around the first cylinder with a space defined between the first cylinder and the second cylinder for a handled fluid to flow therethrough. Since the first cylinder and the second cylinder are made of non-austenitic cast stainless steel which has a greater heat conductivity and a smaller thermal expansion coefficient than austenitic stainless steel, and which is magnetic, a good productivity and good motor characteristics are achieved.

The second cylinder has a seat provided on an outer circumferential surface thereof for installing a frequency converter thereon, and the first cylinder, the second cylinder, and the seat are integrally formed of non-austenitic cast stainless steel. Therefore, the frequency converter can effectively and stably be water-cooled.

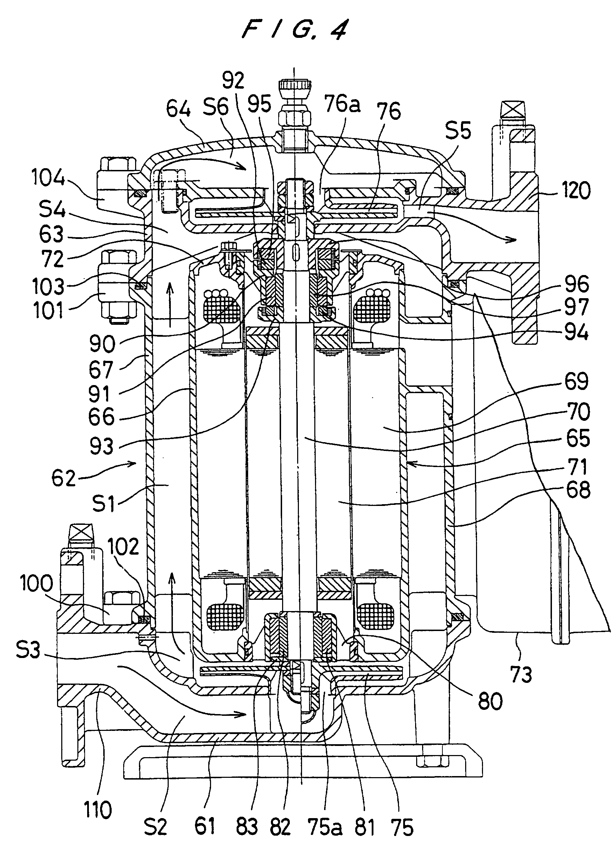

A second embodiment of the present invention will be described in detail below with reference to FIG. 4.

FIG. 4 is a vertical cross-sectional view showing a multistage motor pump according to the second embodiment.

As shown in FIG. 4, a multistage motor pump according to the second embodiment is basically made up of an inlet nozzle casing 61, a motor frame 62, an outlet nozzle casing 63, a casing cover 64, and a canned motor 65. In the present embodiment, the inlet nozzle casing 61 serves as a first nozzle casing and the outlet nozzle casing 63 as a second nozzle casing. However, the outlet nozzle casing may serve as the first nozzle casing, and the inlet nozzle casing may serve as the second nozzle casing.

The motor frame 62 comprises a first cylinder 66 housing a motor stator 69 of a canned motor 65 therein, a second cylinder 67 disposed around the first cylinder 66, and a flat seat 68 provided on an outer circumferential surface of the second cylinder 67 for installing a frequency converter thereon. The first cylinder 66, the second cylinder 67, and the flat seat 68 are integrally made of non-austenitic cast stainless steel. A passage S1 for a handled fluid to flow therethrough is defined between the first cylinder 66 and the second cylinder 67.

The motor stator 69 is shrink-fitted or press-fitted in the first cylinder 66, and a motor rotor 71 shrink-fitted over a main shaft 70 is rotatably disposed inside of the motor stator 69. A motor frame side plate 72 made of non-austenitic cast stainless steel is hermetically welded to an upper axial end of the first cylinder 66. The flat seat 68 has a flat surface on which there is mounted a case 73 which houses the frequency converter (not shown) therein.

Impellers 75, 76 are fixedly mounted respectively on opposite ends of the main shaft 70 of the canned motor 65, and have respective inlet ports 75a, 76a which are open axially outwardly. The impellers 75, 76 are housed respectively in an inlet nozzle casing 61 and an outlet nozzle casing 63, described later on.

The impellers 75, 76 are either cast of non-austenitic cast stainless steel or pressed and welded of thin austenitic stainless steel, and produce a high pump head (pressure) up to 100 m per stage. In FIG. 4, each of the impellers 75, 76 is shown as having a right half which is cast of non-austenitic cast stainless steel and a left half which is pressed and welded of thin austenitic stainless steel.

The main shaft 70 is supported at its opposite ends by bearings disposed in the motor frame 62. Of these bearings, bearing-related parts on a lower portion (first stage) of the main shaft 70 will first be described below.

A radial bearing 81 is mounted on a bearing bracket 80. In FIG. 4, the reference numeral 82 denotes a sleeve which makes up a sliding assembly in cooperation with the radial bearing 81, and the sleeve 82 is held in abutment against a washer 83. The bearing bracket 80 is held in abutment against the end of the first cylinder 66.

Next, bearing-related parts on an upper portion (second stage) of the main shaft 70 will be described below.

A radial bearing 91 and a fixed thrust bearing 92 are mounted on a bearing bracket 90. The radial bearing 91 has an end face functioning as a fixed thrust sliding member, and a rotatable thrust bearing 94 held by a thrust disk 93 is held in sliding contact with the end face of the radial bearing 91. A rotatable thrust bearing 95 serving as a rotatable thrust sliding member is disposed in confronting relation to the fixed thrust bearing 92. In FIG. 4, the reference numeral 97 denotes a sleeve which makes up a sliding assembly in cooperation with the radial bearing 91.

The radial bearings 81, 91, the thrust bearings 92, 94, 95, and the sleeves 82, 97 are made of silicon carbide, which is a ceramic material, and the bearing brackets 80, 90 and the thrust disks 93, 96 are made of stainless steel (either austenitic stainless steel or non-austenitic stainless steel).

The canned motor 65 comprises two-pole three-phase induction motor and operates at a high rotational speed of about 7500 revolutions per minute with an electric power at 125 Hz under 200 V, for example, supplied from the frequency converter. As a result, the pump including the impellers 75, 76 is reduced in size. The handled fluid flowing through the passage S1 between the first cylinder 66 and the second cylinder 67 effectively cools the motor whose surface area is reduced by its reduced size. The handled fluid blocks noise of a relatively high frequency which is produced at high-speed operation of the pump, and also effectively cools the frequency converter.

The inlet nozzle casing 61 and the outlet nozzle casing 63 are fixed respectively to the opposite axial ends of the second cylinder 67 of the motor frame 62. Specifically, the opposite axial ends of the second cylinder 67 of the motor frame 62 have sockets (not shown) for providing coaxial relationship with attached components and bolt seats 100, 101 for fastening bolts. The inlet nozzle casing 61 and the outlet nozzle casing 63 are fixed in position by the bolt seats 100, 101. O-rings 102, 103 are disposed respectively on the opposite axial ends of the second cylinder 67 of the motor frame 62, sealing the nozzle casings 61, 63 and the motor frame 62.

The second cylinder 67, the inlet nozzle casings 61, and the outlet nozzle casings 63 are held in direct contact with each other. As a result, the heat generated by the frequency converter is not only radiated from the inner surface of the second cylinder 67, but also transferred from the aforementioned contact surfaces to the nozzle casings 61, 63 and effectively radiated from the inner surfaces thereof.

The inlet nozzle casing 61 has an inlet nozzle 110, and a passage S2 extends from the inlet nozzle 110 to the inlet port 75a of the impeller 75 in the first stage. A wall defining the passage S2 also defines a passage S3 that provides communication between the inlet port 75a of the impeller 75 and the passage S1.

The fluid drawn from the inlet nozzle 110 of the inlet nozzle casing 61 into the passage S2 passes through the inlet port 75a of the impeller 75 in the first stage, and is increased in pressure by the impeller 75. The fluid which has been increased in pressure flows through the passage S3 into the passage S1.

The outlet nozzle casing 63 has a passage S4 communicating with the passage S1 and a passage S5 which extends from the outlet port of the impeller 76 in the second stage to an outlet nozzle 120.

A bolt seat 104 for fastening a bolt is mounted on an upper portion of the outlet nozzle casing 63, and the casing cover 64 is fixed to the bolt seat 104. The casing cover 64 has a space S6 communicating with the passage S4 defined in the outlet nozzle casing 63, and a central region of the outlet nozzle casing 63, i.e., a region where the inlet port 76a of the impeller 76 in the second stage is positioned, is opened. Therefore, the fluid which is increased in pressure by the impeller 75 in the first stage and flows into the passage S1 is introduced into the passage S4 in the outlet nozzle casing 63, and reaches the space S6 in the casing cover 64. Then, the fluid flows from the space S6 in the casing cover 64 through the inlet port 76a of the impeller 76, is increased in pressure by the impeller 76, and is discharged through the passage S5 from the outlet nozzle 120 of the outlet nozzle casing 63.

Each of the inlet nozzle casing 61 and the outlet nozzle casing 63 is fixed to the motor frame 62 by four bolts. Specifically, the bolt seats 100, 101 of the second cylinder 67 of the motor frame 62 are angularly spaced at 90° on the circumference of the second cylinder 67, and the nozzle casings 61, 63 are fixed to the second cylinder 67 by the four bolt seats 100, 101, respectively.

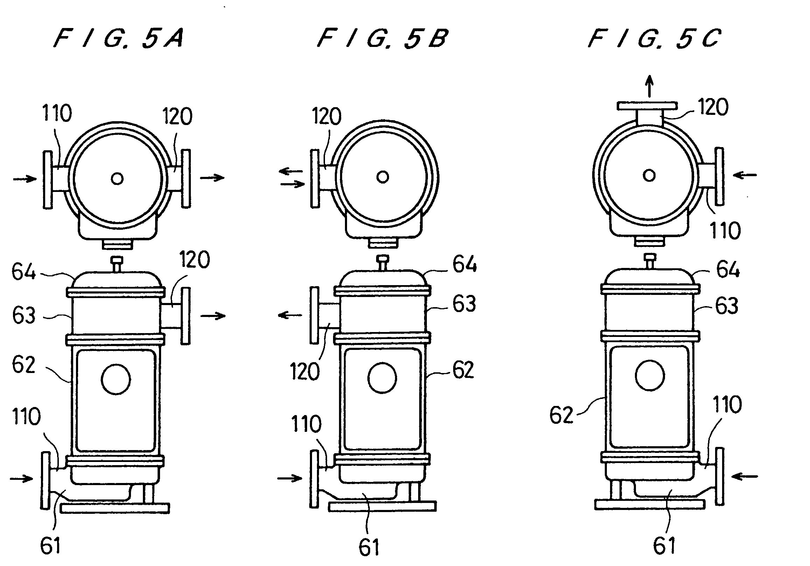

With this arrangement, the directions of the inlet nozzle 110 and the outlet nozzle 120 of the nozzle casings can be changed angularly at 90°. FIG. 5A shows the directions of the inlet nozzle 110 and the outlet nozzle 120 in the cross-sectional view of FIG. 4. The directions of the inlet nozzle 110 and the outlet nozzle 120 are not limited to those shown in FIG. 5A, but may be changed as shown in FIGS. 5B and 5C. Therefore, the directions of the inlet nozzle and the outlet nozzle of the pump can freely be changed to suit the environment where the apparatus is installed, for example.

The multistage motor pump according to the present invention can be divided into the inlet nozzle casing 61, the motor frame 62, the outlet nozzle casing 63, and the casing cover 64. Since these components can easily be separated from each other, the oil-proofing and decreasing processes for the multistage motor pump according to the present invention can be carried out more easily than for the conventional multistage motor pump.

If the pump has requirements of a flow rate of 0.08 (m³/min) and a pump head of 200 (m), two stages of impellers are provided, and the impellers are rotated at a rotational speed of 7500 (min⁻¹), then a specific speed Ns which serves as an indicator in designing pumps and impellers is 67 (m³/min, m, min⁻¹).

The value of the specific speed causes the following problems in designing hydromodels including impellers. If the specific speed Ns < 70, then the pump efficiency is greatly reduced. This has widely been known in the art as described in pages 43 through 51, Vol. 27, No. 12, "Turbomachinery". According to the ordinary impeller designing process, the diameter (the diameter of the outlet of an impeller) is about 110 through about 130 (mm), and the width of vanes (the width at the outlet of an impeller) is about 1 through about 2 mm, so that it is difficult to manufacture impellers according to a casting process and clogs tend to happen in the pump when the pump draws foreign matters.

According to the present embodiment, the above problems are solved by the following process in designing impellers. (1) For example, it is assumed to design an impeller having eight vanes and a flow rate which is four times greater, i.e., 0.32 (m³/min). Since the specific speed Ns of the designed impeller is 134 (m³/min, m, min⁻¹), the pump efficiency is not greatly reduced, and the outlet of the impeller has a width of 2 (mm) or larger. (2) Then, six out of the eight impeller passages defined by the eight vanes are closed off to prevent the handled fluid from flowing, so that the flow rate of the impeller becomes about 0.08 (m³/min). If the impeller is produced by a casting process, then the six passages can be closed off altogether in advance. According to the above process, it is possible to design and manufacture impellers having foreign matter passage diameters without impairing the pump efficiency and productivity.

According to the present invention, as described above, it is possible to provide a multistage motor pump which can easily cope with options, such as a change in the direction of an inlet portion (e.g., an inlet nozzle) connected to a pipe for drawing the handled liquid or an outlet portion (e.g., an outlet nozzle) connected to a pipe for discharging the handled liquid, and can easily be made oil-proof and degreased, and is smaller in size and more compact, and is suitable for use with various apparatus. Furthermore, it is possible to provide a pump assembly which can be manufactured with a good productivity, can effectively and stably water-cool a motor and an installed inverter, and is of a highly compact arrangement in which a pump and a motor are reduced in size by higher rotational speeds and simultaneously an inverter is reduced in size.

More specific advantages are as follows: Since the direction of an inlet portion (e.g., an inlet nozzle) connected to a pipe for drawing the handled liquid or an outlet portion (e.g., an outlet nozzle) connected to a pipe for discharging the handled liquid can be changed in modifying and designing the pump to meet specifications of customers, it is not necessary to design wasteful piping layouts, and the overall apparatus including the pump is made compact. Inasmuch as the multistage motor pump is divided into a first nozzle casing, a motor frame, a second nozzle casing, and other components, these components can easily be separated from each other, and hence the oil-proofing and degreasing processes can easily be carried out.

### Industrial Applicability

The present invention is suitable for use in a motor frame having a structure designed for mounting a frequency converter and made of stainless steel, and a motor and a motor pump which use the motor frame. The present invention is suitable for use in a multistage motor pump having impellers mounted respectively on the opposite ends of a main shaft.

## Claims

1. A motor frame **characterized in that** a first cylinder housing a motor stator therein, a second cylinder disposed around said first cylinder with a space defined between said first cylinder and said second cylinder for a handled fluid to flow therethrough, and a seat disposed on an outer circumferential surface of said second cylinder for installing a frequency converter thereon, are integrally formed of one metal material.

2. A motor frame according to claim 1, **characterized in that** said second cylinder has on opposite axial ends thereof sockets for providing coaxial relationship with attached components and bolt seats for fastening bolts.

3. A motor frame according to claim 2, **characterized in that** said seat for installing a frequency converter thereon is positioned between bolt seats in the motor frame as viewed from an axial end.

4. A motor frame according to any one of claims 1 through 3, **characterized in that** an axial rib interconnecting said first cylinder and said second cylinder have a length which is at least equal to one half of the overall length of the motor frame.

5. A motor frame according to any one of claims 1 through 4, **characterized in that** an axial end of the motor frame and a component attached to said axial end are held in direct contact with each other.

6. A motor **characterized by** comprising: a motor frame according to any one of claims 1 through 5; a motor stator housed in said first cylinder of said motor frame; a motor frame side plate closing an open end of said motor frame; and a motor rotor disposed inside of said motor stator and rotatably supported by a bearing provided in said motor frame.

7. A motor pump **characterized by** comprising: a motor according to claim 6; an impeller fixed to a main shaft of said motor rotor; and a nozzle casing mounted on an axial end of said motor frame and housing said impeller therein.

8. A motor pump according to claim 7, **characterized in that** said nozzle casing comprises an inlet nozzle casing and an outlet nozzle casing.

9. A motor pump according to claim 8, **characterized in that** said inlet nozzle casing and said outlet nozzle casing are identical parts.

10. A motor frame housing a motor stator therein, **characterized in that**:
the motor frame is formed of non-austenitic cast stainless steel.

11. A motor frame **characterized in that**:
the motor frame comprises a first cylinder housing a motor stator therein and a second cylinder disposed around said first cylinder with a space defined between said first cylinder and said second cylinder for a handled fluid to flow therethrough; and
said first cylinder and said second cylinder are formed of non-austenitic cast stainless steel.

12. A motor frame according to claim 11, **characterized in that** said first cylinder and said second cylinder are formed integrally with each other.

13. A motor frame according to claim 11, **characterized in that** said second cylinder has a seat for installing a frequency converter on an outer circumferential surface thereof; and said first cylinder, said second cylinder, and said seat are formed of non-austenitic cast stainless steel.

14. A motor frame according to claim 13, **characterized in that** said first cylinder and said second cylinder are formed integrally with each other.

15. A motor frame according to any one of claims 10 through 14, **characterized in that** said non-austenitic cast stainless steel comprises martensitic stainless steel containing 15 - 17 % of chromium, 0.5 - 2 % of molybdenum, 4 - 6 % of nickel, and 0.05 % or less of carbon.

16. A motor frame according to any one of claims 10 through 14, **characterized in that** said non-austenitic cast stainless steel comprises ferritic stainless steel containing 20 - 30 % of chromium and 0.5 - 4 % of molybdenum.

17. A motor **characterized by** comprising: a motor frame according to any one of claims 10 through 16; a motor stator housed in said first cylinder of said motor frame; and a motor rotor disposed inside of said motor stator and rotatably supported by a bearing provided in said motor frame.

18. A motor according to claim 17, **characterized in that** said motor comprises a canned motor having a rotor can sealing said motor rotor therein.

19. A motor according to claim 17 or 18, **characterized in that** said motor comprises a submerged motor having a hermetically sealed structure in said motor frame.

20. A motor pump **characterized by** comprising: a motor according to any one of claims 17 through 19; an impeller fixed to a main shaft of said motor rotor; and a pump casing housing said motor and said impeller therein.

21. A multistage motor pump **characterized by** comprising: a motor frame housing a motor stator and providing a passage for a handled liquid around said motor stator; a first nozzle casing mounted on an axial end of said motor frame at a variable angle as viewed in an axial direction; a second nozzle casing mounted on an opposite axial end of said motor frame at a variable angle as viewed in the axial direction; and at least one impeller housed in each of said first nozzle casing and said second nozzle casing.

22. A multistage motor pump **characterized by** comprising: a motor providing a passage for a handled liquid around a motor stator; a first nozzle casing mounted on an axial end of said motor at a variable angle as viewed in an axial direction; a first impeller disposed in said first nozzle casing for guiding said handled liquid to said passage around said motor stator, a second nozzle casing mounted on an opposite axial end of said motor at a variable angle as viewed in the axial direction; and a second impeller disposed in the second nozzle casing for guiding said handled liquid from said passage around said motor stator, said first impeller and said second impeller having respective inlet ports directed opposite to each other.

23. A multistage motor pump according to claim 21 or 22, **characterized in that** a canned motor is used.
